# FASCICULE DE BREVET EUROPEEN

(11) **EP 2 291 623 B1**
(45) Date de publication et mention de la délivrance du brevet: **07.06.2017**
(21) Numéro de dépôt: 09784189.4
(22) Date de dépôt: 07.05.2009
(51) Int. Cl.: G01G 23/36

(54) **APPAREIL DE PESAGE A INTERFACE INTERACTIVE**
WAAGE MIT INTERAKTIVER SCHNITTSTELLE
WEIGHING APPARATUS WITH INTERACTIVE INTERFACE

(30) Priorité: 13.06.2008 FR 0803295
(43) Date de publication de la demande: 09.03.2011
(73) Titulaire: SEB S.A., 69130 Ecully (FR)
(72) Inventeur: CAREGNATO, Stéphane, F-74150 Bloye (FR); VERJAT, Emmanuelle, F-74150 Bloye (FR)
(74) Mandataire: Guéry-Jacques, Géraldine
(86) Numéro de dépôt international: PCT/FR2009/000541
(87) Numéro de publication internationale: WO 2010/029221

(56) Documents cités:
- EP-A- 0 089 406
- DE-A1- 3 631 487
- FR-A- 2 499 714
- US-A1- 2007 102 666

## Description

La présente invention concerne un appareil de pesage électronique; plus particulièrement une balance de cuisine.

Les appareils du type précité comportent généralement un plateau apte à recevoir un poids, un dispositif de mesure du poids présent sur le plateau comprenant un afficheur à cristaux liquides pour afficher le poids mesuré, et des touches de fonction du type tare, pesée de liquide, mise en mémoire. Le problème qui se pose avec ces appareils comportant de nombreuses touches de fonction est que leur utilisation est rendue complexe par la multiplication des choix possibles lors de la réalisation de cycles de pesée.

On connaît du document US4567481 une balance électronique comportant un afficheur du type écran à cristaux liquides, comprenant plusieurs secteurs d'affichage. Un premier secteur affiche le résultat de la mesure et un deuxième secteur comprend plusieurs zones affichant le type de résultat, par exemple poids net, poids brut, tare. Un troisième secteur comporte quant à lui plusieurs zones affichant les différentes opérations qui sont requises ou possibles à une étape donnée d'un cycle de pesée du type : calibrer le zéro de la balance, afficher le poids net, afficher le poids brut, réaliser la tare.

A chaque opération est associé un bouton fonctionnel permettant à l'utilisateur d'activer cette opération (par exemple lorsqu'il y a besoin de tarage, la zone correspondante devient visible et requiert un appui sur le bouton adjacent).

Les différentes zones affichant le type de résultat et les différentes opérations qui sont requises ou possibles à une étape donnée d'un cycle de pesée, sont normalement opaques et elles changent en devenant transparentes lorsque commandées par un circuit électronique de pilotage.

Ce type de fonctionnement offre à l'utilisateur à chaque étape d'un cycle de pesée tous les choix possibles, le plus souvent deux, voire trois choix ; ce qui finalement aide peu cet utilisateur et peut le perturber en masquant certaines zones d'affichage. L'inconvénient de cette balance est que l'utilisateur se voit proposer tous les choix possibles par activation de toutes les touches de commandes associées, sans être plus guidé vers une utilisation optimale et sans recevoir d'explication sur les choix possibles.

Le document US4862401 décrit une balance comportant un circuit électronique apte à exécuter successivement des séquences de fonctions, indépendantes les unes des autres, au moyen de touches de sélection de fonctions. Le circuit comporte un mode automatique comprenant une matrice qui stocke une séquence de fonctions basée sur les utilisations précédentes et la suggère à l'utilisateur en activant ou en affichant les touches correspondant aux fonctions d'une séquence stockée. Les résultats sont affichés par un dispositif de type à cristaux liquides. L'utilisateur peut accepter l'étape proposée par appui sur la touche qui affiche la fonction proposée, ou bien, peut désactiver le mode automatique et ensuite appuyer sur une autre touche qui est la touche de commande qu'il aura choisie arbitrairement.
Cette balance permet à un utilisateur d'effectuer un cycle de pesée proposé automatiquement et en fonction de l'historique d'usage de la balance. L'inconvénient est que l'utilisateur, guidé selon son usage historique, validera, s'il n'est pas suffisamment avisé sur toutes les fonctions de la balance, toujours la même fonction suivante sans pouvoir connaître tous les fonctions possibles de la balance.

Ces inconvénients précités ont été dévoilés lors de tests consommateurs. En effet, à l'issue de tels tests, la demanderesse a constaté que la plupart des utilisateurs ne connaissent pas toutes les fonctions proposées par de telles balances. Par exemple, certains utilisateurs ne connaissent pas l'usage de la fonction « tare » proposée et vont utiliser un récipient par ingrédient à peser, ou vont éteindre et rallumer la balance avant de peser chaque ingrédient. D'autres utilisateurs identifient « tare » à une autre fonction que la remise à zéro, ou pensent qu'ils ne peuvent utiliser cette fonction qu'une fois dans le cycle de pesée. Par ailleurs, certains utilisateurs ne connaissent pas la conversion de pesée en liquide et vont utiliser à côté de la balance un verre doseur de liquide qui augmente le nombre d'ustensiles utilisés. Enfin d'autres utilisateurs ne connaissent pas la fonction « mémoire » qui permet de retrouver une, voire plusieurs mesures antérieures.

Le but de la présente invention est de remédier aux inconvénients précités et de proposer un appareil de pesage muni d'un dispositif permettant de guider l'utilisateur de façon simple et sûre à chaque étape d'un cycle de pesée.

Un autre but de l'invention est de proposer un appareil de pesage muni d'un dispositif permettant de guider l'utilisateur à chaque étape d'un cycle de pesée qui soit simple et très économique à mettre en oeuvre.

Un autre but de l'invention est d'éduquer, lors de l'usage de la balance, tout utilisateur, avisé ou non, sur l'utilisation de la balance la plus efficace, c'est-à-dire au maximum des possibilités de toutes fonctions offertes par la balance.

Ces buts sont atteints avec une balance de cuisine comportant des touches de commande permettant de sélectionner une fonction telle que la réalisation de la tare, une pesée d'un liquide, une pesée d'un solide ou la mise en mémoire d'une mesure, à une étape de réalisation d'un cycle de pesée, ladite balance comportant un dispositif d'identification d'au moins une touche de commande piloté par un circuit électronique, caractérisé en ce qu'une seule touche de commande correspondant à sa fonction unique est identifiée comme la fonction suivante la plus probable à mettre en oeuvre par étape de fonctionnement d'un cycle de pesée.

Par fonctions, on comprend des fonctions réalisées par la balance autres que l'affichage du poids mesuré, du type réaliser une tare, une pesée d'un liquide, une pesée d'un solide avec affichage en gramme, une mise en mémoire.

Par pesée de liquide on comprend l'évaluation du volume d'un liquide à partir de sa pesée et d'une densité mémorisée dans la balance, puis l'affichage du résultat en centilitre, en décilitre ou toute autre unité de volume.

Selon l'invention, une seule touche de commande de fonction est identifiée et mise en avant par rapport aux autres touches. Cette touche identifiée active la fonction suivante la plus probable à mettre en oeuvre dans le cycle de pesée en cours ; ce qui fournit à l'utilisateur une assistance pour décider de la fonction à mettre en oeuvre pour continuer le cycle de pesée.

Ainsi, l'utilisateur choisit de façon sûre et sans hésitation la fonction suivante à utiliser dans le cycle de pesée qu'il est en train de réaliser par une proposition unique. Son choix n'est pas perturbé par une proposition multiple de touches mises en avant ou par des touches masquées qui limitent la compréhension des fonctions de la balance.
Selon l'invention, le circuit électronique comporte un algorithme prédéfini d'identification de la fonction la plus probable à mettre en oeuvre en fonction de la nature de l'étape ou des étapes précédente(s).
On entend par algorithme prédéfini un algorithme mis au point sans tenir compte de l'usage historique de la balance en question. Cet algorithme aura pour résultat de proposer de façon constante à tout utilisateur la même fonction selon l'étape ou les étapes précédentes effectuées. L'algorithme est programmé et mémorisé par le fabricant qui tient compte de toutes les fonctions proposées par la balance et les programment pour leur utilisation optimale. L'utilisation optimale est choisie de sorte à rendre le cycle de pesée le plus court possible et/ou éviter l'usage de récipients superflus et/ou proposer une fonction alternative à la précédente étape réalisée pour la porter à la connaissance de l'utilisateur.

Selon l'invention, la nature des étapes précédentes est comprise dans l'ensemble comprenant: la variation de poids (augmentation ou diminution), l'appui de la touche pesée d'un liquide, l'appui de la touche pesée d'un solide, l'appui de la touche Tare, l'appui d'une touche marche/arrêt.
Selon l'invention, l'ensemble des touches de commande comprend au moins une touche parmi les suivantes : touche de fonction réalisation de la tare, touche de fonction pesée d'un liquide, touche de fonction pesée d'un solide, touche de fonction mise en mémoire d'une mesure.
Avantageusement, cette assistance à l'utilisation de la balance n'est qu'une proposition pour aider l'utilisateur. A chaque étape d'un cycle de pesée, le circuit électronique garde les touches de commande de fonction non identifiées opérationnelles : elles peuvent être actionnées si l'utilisateur décide de réaliser une autre opération que celle suggérée.
Par opérationnelle on entend que la touche reste activable par l'utilisateur même si elle n'est pas proposée comme fonction suivante à l'utilisateur. L'utilisateur peut décider de ne pas suivre la fonction proposée par la balance en appuyant sur une autre touche correspondant à la fonction qu'il souhaite sélectionner ou en ignorant cette proposition. Une fois que l'utilisateur a appuyé sur cette autre touche, la touche proposée n'est alors plus identifiée (mise en avant par son éclairage par exemple), la balance prend en compte la fonction sélectionnée et se recale ensuite sur l'algorithme pour la proposition de la fonction ultérieure.

Avantageusement, le dispositif d'identification comporte au moins un moyen d'éclairage de chaque touche de commande.

Cette disposition permet d'obtenir un dispositif d'identification simple et très efficace pour mettre en avant une touche de commande
Selon l'invention au moins un moyen d'éclairage est capable, lorsqu'il est activé par le dispositif d'identification, de produire un ou plusieurs cycles d'éclairage comprenant une première phase de croissance lente de l'intensité lumineuse suivie d'une deuxième phase de décroissance lente de l'intensité lumineuse, et éventuellement suivie d'une troisième phase d'extinction de l'intensité lumineuse. Ce type de cycle d'éclairage peut être appelé « respiration de la lumière ». Selon l'invention la durée de phase de croissance de 0 à 100% d'intensité lumineuse, la durée de phase de décroissance de 100 à 0% peuvent être égales. Elles peuvent être chacune comprises dans un intervalle temporel de 2 à 5 secondes. La durée de chaque phase permet une montée et une descente d'éclairage, suivie éventuellement d'une extinction qui sont de durée pouvant être assimilée à un cycle de respiration humaine.

De préférence, chaque moyen d'éclairage comporte au moins une diode électroluminescente.

Cette disposition permet de réaliser un dispositif d'éclairage très économique à partir d'un composant standard du commerce, avec un choix de couleur important.

Avantageusement, ladite balance comporte un afficheur pour afficher un poids mesuré, et les touches de commande des fonctions sont disposées autour de l'afficheur.

Cette disposition permet de grouper en un seul endroit les touches de commande et l'afficheur qui forment l'interface de la balance avec l'utilisateur, ce qui facilite l'utilisation de la balance.

De préférence, chaque touche de commande est une touche virtuelle.

Par touche virtuelle, on entend une zone matérialisée en une position prédéterminée de la balance. L'application d'une pression sur la zone matérialisée est détectée par le circuit électronique qui est adapté pour réaliser la fonction correspondante. Pour ce faire, la balance comporte au moins un capteur de poids connecté au circuit électronique apte à transformer le signal de déformation du capteur en signaux électriques représentatifs de l'intensité du poids et de la position du point d'application de ce poids sur le plateau. Ce type d'appareil est décrit, par exemple, dans le brevet FR2758184 déposée par la demanderesse.

Cette disposition permet de réaliser des touches de commande de fonctions de manière très économique, une partie de la balance étant utilisée comme clavier.

Avantageusement, chaque touche de commande comporte au moins un contact mobile.

Cette disposition permet d'obtenir une touche avec un retour d'information tactile lors de l'activation de la fonction, correspondant au changement de position du contact.

De préférence, ladite balance comporte un afficheur pour afficher un poids mesuré, et les touches de commande de fonctions sont disposées à l'intérieur de l'afficheur.

Cette disposition permet de regrouper dans l'afficheur les touches de commande de fonctions et l'affichage du poids et ainsi permet de mettre en oeuvre un design épuré.

Avantageusement, chaque touche de commande est une touche virtuelle intégrée à l'afficheur.

Cette disposition permet une construction très économique des touches de commande de fonctions.

L'invention sera mieux comprise à l'étude des modes de réalisation pris à titre nullement limitatif et illustrés dans les figures annexées dans lesquelles :
- La figure 1 illustre une vue en perspective de l'appareil selon un mode particulier de réalisation de l'invention.
- La figure 2 illustre une vue en coupe partielle selon la ligne II - II de l'appareil de la figure 1.
- La figure 3 illustre une vue en perspective de l'appareil selon un autre mode de réalisation de l'invention
- La figure 4 représente un exemple d'algorithme détaillé d'identification de touches de fonction suivant l'étape ou les étapes précédentes,
- La figure 5 illustre la « respiration » de la touche lumineuse selon un intervalle temporel proposé comme exemple,
- La figure 6 illustre un circuit utilisé pour la modulation en largeur d'impulsion pour commander le cycle de respiration de la touche lumineuse.

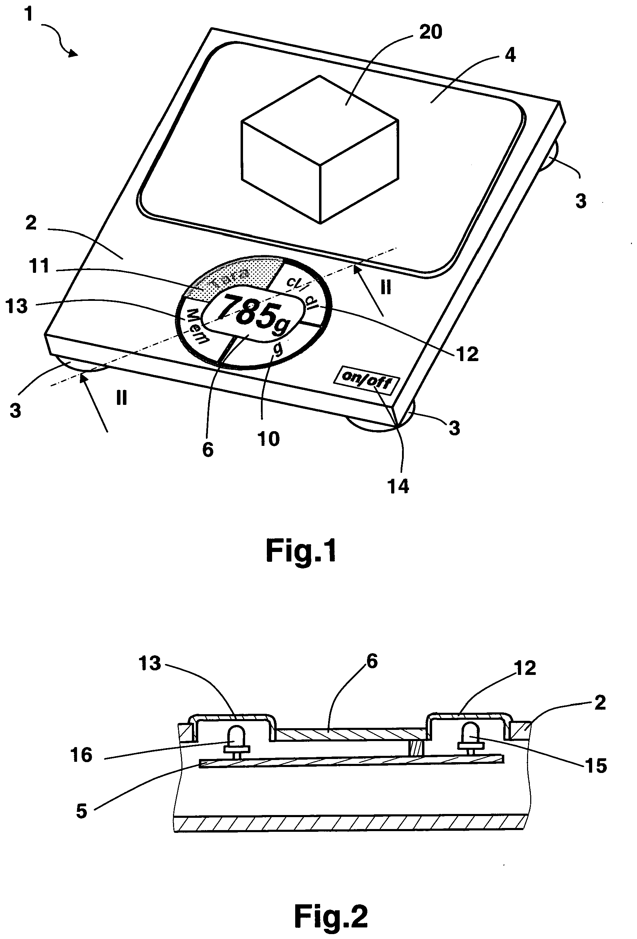

Tel que visible aux figures 1 et 2, la balance de cuisine 1 électronique réalisée conformément à l'invention comporte un châssis 2 de forme générale parallélépipédique équipé à chacun de ses coins de quatre pieds 3 qui reposent sur un plan de travail, un plateau 4 supporté par le châssis 2, un dispositif de pesage pour mesurer un poids 20 posé sur le plateau 4 et un dispositif d'affichage du poids mesuré. Le dispositif d'affichage comporte un afficheur 6 à cristaux liquides.

Le châssis 2 supporte le dispositif de pesage (non détaillé sur les figures) qui comporte un circuit électronique 5 (fig.2) alimenté par des batteries et quatre capteurs assemblés dans le châssis 2 en face de chaque pied 3. Les capteurs comprennent des jauges de contraintes reliées au circuit électronique 5 par des câblages. Lors d'une pesée d'un poids 20, les jauges de contraintes se déforment sous l'action du poids et modifient le signal électrique mesuré par le circuit électronique 5 qui calcule alors le poids 20 présent sur le plateau 4 et l'affiche sur l'afficheur 6.

Autour de l'afficheur 6 sont disposées des touches de commande 10, 11, 12, 13 de fonctions du type affichage de la pesée d'un solide en gramme, réalisation de la tare, affichage de la pesée d'un liquide en centilitre, mise en mémoire de la mesure.

Une touche ON/OFF 14 permet la mise en marche et l'arrêt de la balance. Elle est dissociée de l'afficheur et elle est indépendante des touches de commande 10, 11, 12, 13 de fonctions.

Les touches de commande 10, 11, 12, 13 sont du type virtuelles. Pour chaque touche, une pièce plastique colorée translucide fixée sur le châssis matérialise la zone d'appui. Chaque pièce plastique comporte un marquage et éventuellement un symbole pour identifier la fonction mise en oeuvre par cette touche de commande 10, 11, 12, 13.

L'application d'une pression sur la pièce plastique est détectée par le circuit électronique 5 qui est adapté à réaliser la fonction correspondant au marquage présent sur la touche. Pour ce faire, les capteurs de poids transmettent chacun un signal de déformation au circuit électronique 5 qui est apte à transformer ces signaux en signaux électriques représentatifs de l'intensité du poids et de la position du point d'application de ce poids sur le châssis 2.

Une diode électroluminescente 15, 16 (fig.2) est agencée sur le circuit électronique 5 derrière chaque touche 10, 11, 12, 13. L'allumage de la diode provoque une émission de lumière qui est diffusée à travers la matière translucide de la touche permettant à cette dernière d'être identifiée par l'utilisateur. La figure 2 illustre l'assemblage mécanique permettant de mettre en oeuvre l'invention d'une manière efficace et peu coûteuse : La source lumineuse 16 à base de LED (diode électroluminescente) est montée sur un circuit électronique 5 comportant le système de pilotage des LED (à base de composants électroniques) ainsi que le pilotage de l'afficheur 6 LCD. Ce sous ensemble est placé à l'aplomb de la pièce diffuseur 12 et 13 qui permet la répartition de la lumière dans les touches. Cette pièce est ici solidaire du corps du châssis 2. Selon l'invention, la balance comporte au moins un moyen d'éclairage capable, lorsqu'il est activé par le dispositif d'identification, de produire un ou plusieurs cycles d'éclairage comprenant une première phase de croissance lente de l'intensité lumineuse suivie d'une deuxième phase de décroissance lente de l'intensité lumineuse, et éventuellement suivie d'une troisième phase d'extinction.
Selon l'invention, la durée de phase de croissance de 0 à 100% d'intensité lumineuse et la durée de phase de décroissance de 100 à 0% peuvent être égales et chacune comprises dans un intervalle temporel entre 2 et 5 secondes.

Plus particulièrement, un mode de « respiration » peut comprendre : une phase d'intensité lumineuse croissante linéairement de 0 à 100% en 3,2 secondes, une phase d'intensité lumineuse décroissante linéairement de 100 à 0% en 3,2 secondes, et une phase éteinte de 2,1 secondes. Ces durées sont des valeurs typiques qui peuvent varier de + ou - 20% suivant les produits et les conditions d'utilisation.
Cette « respiration » de la lumière se différentie d'un clignotement de la lumière dont le rythme lumineux choisi attire l'attention de l'utilisateur pour demander une action. Dans un clignotement, les phases de croissance et décroissance sont très courtes car le temps de commutation entre l'état allumé et l'état éteint est généralement réduit à 0 et la fréquence du cycle est d'environ 0,5Hz contre environ 0,2Hz pour une « respiration ». La courbe d'intensité lumineuse en fonction du temps pour un clignotement prend la forme d'un carré.

La gestion lumineuse de la touche est un point important de l'aspect « guide » par la balance qui est caractérisé par :
- un rythme/un cycle d'allumage (fréquence et rapport cyclique),
- une croissance / décroissance de la lumière par unité de temps,
- une puissance lumineuse (selon la diffusion souhaitée),
- une couleur (intensité, sensibilité de l'oeil).

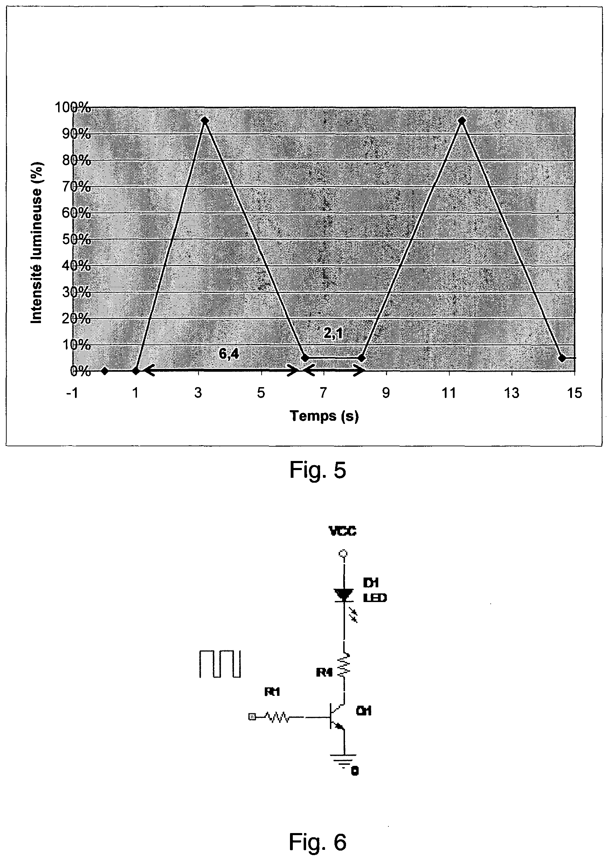

Un exemple de rythme retenu, proche d'une respiration, est illustré en figure 5. Le battement de la touche étant assez lent (0.2Hz), il peut être également intéressant de jouer sur le seuil minimum d'intensité (dans l'exemple 5%) à l'issue d'une phase décroissante de manière à toujours garder la touche « éveillée » et connoter la disponibilité de la fonction.

La respiration de la touche identifiée a pour but de donner l'impression à l'utilisateur qu'il s'agit d'une suggestion de touche fonction et non d'une obligation de touche fonction. Cette respiration peut être combinée à une couleur plutôt douce et/ou une puissance lumineuse raisonnable.

Pour contrôler l'intensité lumineuse et la « respiration » des touches de fonction, un mode de réalisation possible est le suivant : Un circuit de modulation en largeur d'impulsion (PWM), illustré en figure 6, qui permet, à travers une source de tension carrée et d'un mode saturé-bloqué (non linéaire) d'un transistor, de contrôler le courant moyen dans la LED. Une gestion dynamique de ce mode (variation du rapport cyclique) permet de créer les rampes d'intensité croissante/décroissante (allumage progressif) pour créer la « respiration » du bouton).

Pour illustrer le fonctionnement de la balance, nous allons réaliser un cycle de pesée : par exemple dans un récipient, peser un ingrédient solide puis un ingrédient liquide.

L'utilisateur active la balance 1 par une pression sur la touche 14 « on/off » et place un récipient sur le plateau 4. A cette étape de fonctionnement d'un cycle de pesée, l'étape suivante la plus probable est de réaliser la tare. Le circuit électronique 5 va donc commander l'allumage de la diode électroluminescente située sous la touche 11 « Tara » pour l'éclairer. Comme, effectivement, l'utilisateur souhaite réaliser la tare du récipient, il appuie sur la touche 11 « Tara » éclairée et le circuit électronique 5 va initialiser l'afficheur 6 et afficher 0 g.

A cette étape, la balance est prête pour peser un ingrédient solide en gramme. L'autre étape probable étant de peser un ingrédient liquide, le circuit électronique 5 va commander l'allumage de la touche 12 pesée d'un liquide « cl - dl ». Comme l'utilisateur souhaite peser un ingrédient solide, il ne tient pas compte de cette touche allumée et place l'ingrédient dans le récipient. La balance détectant une variation de poids sur le plateau 4 va éteindre la touche 12 « cl - dl » et afficher le poids de l'ingrédient en grammes. A cette étape de fonctionnement, l'étape suivante la plus probable est de réaliser la tare ; le circuit électronique 5 va donc commander l'allumage de la touche 11 « Tara ». L'utilisateur appuie alors sur cette touche 11 « Tara » pour initialiser l'afficheur 6 de la balance.

A cette étape, la balance est prête pour peser un ingrédient solide en gramme. L'autre étape probable étant de peser un ingrédient liquide, le circuit électronique 5 va commander l'allumage de la touche 12 « cl - dl ». Comme l'utilisateur souhaite peser un ingrédient liquide, il appuie sur la touche 12 allumée et la balance passe en mode pesée de liquide et affiche 0 cl. L'utilisateur peut alors, verser l'ingrédient liquide dans le récipient et la balance affiche le résultat de la pesée en cl.

A l'issue de cette opération, l'étape suivante la plus probable est de réaliser la tare. Le circuit électronique va donc commander l'allumage de la touche 11 «Tara ».

L'utilisateur ayant terminé le cycle de pesée, appuie sur la touche 14 on/off pour éteindre la balance.

Pendant le fonctionnement exemplatif de la balance, l'utilisateur s'est vu suggérer une fonction après chaque étape effectuée, comme un guidage pas-à-pas suivant toutes les fonctions disponibles de la balance.
Cette fonction prédéterminée par l'algorithme permet d'éduquer l'utilisateur sur toutes les fonctions de la balance et sur l'usage optimal de toutes ces fonctions.
Il s'agit d'une auto-adaption prédéfinie par l'algorithme au contexte de la pesée, c'est-à-dire à l'étape ou les étapes précédentes. Bien sûr, l'algorithme peut changer d'une balance à l'autre si celle-ci comporte un ensemble différent de fonctions.

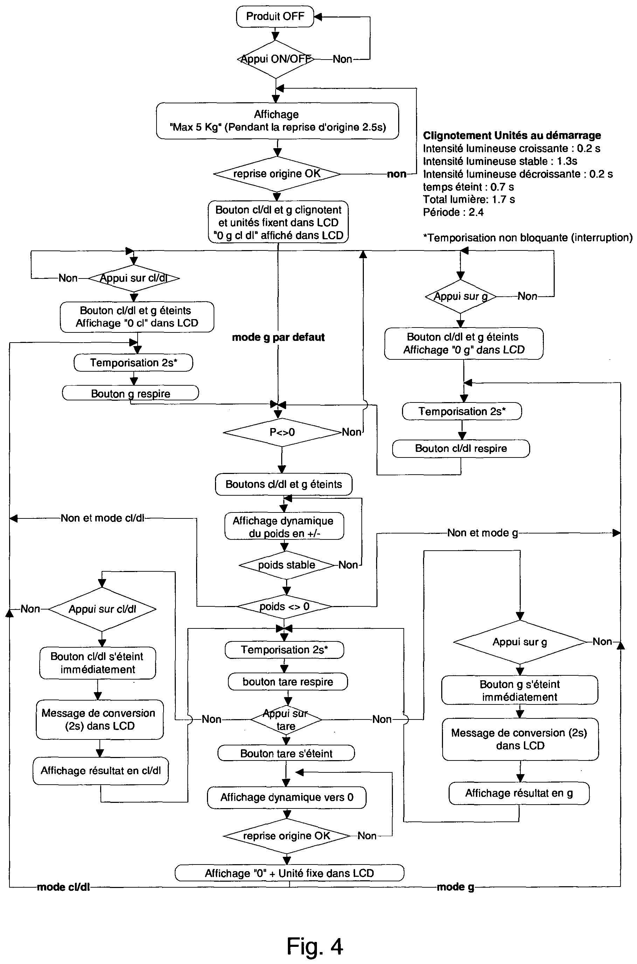

De façon détaillée, la figure 4 représente un exemple d'algorithme d'identification de touches de fonction suivant l'étape ou les étapes précédentes. Il s'agit d'un exemple non limitatif où la nature des étapes peut être la variation de poids, l'appui de la touche pesée d'un liquide, l'appui de la touche pesée d'un solide, l'appui de la touche Tare, l'appui d'une touche marche/arrêt; et où l'ensemble des touches de commande comprend les touches suivantes: touche de fonction réalisation de la tare, touche de fonction pesée d'un liquide et touche de fonction pesée d'un solide.

On décrira les étapes de cet algorithme en relation avec l'invention. La touche marche / arrêt est appuyée, la balance est mise en route. A ce moment, il est demandé à l'utilisateur de choisir entre l'affichage du poids en gramme ou en centilitre : pour cela les deux touches de commande « g » et « cl » clignotent et font comprendre à l'utilisateur qu'il doit choisir entre ces 2 touches. Dans une troisième possibilité, l'utilisateur peut déposer un premier poids et dans ce cas l'affichage sera par défaut en unité pour la pesée d'un solide.
Si l'utilisateur choisit la touche « g », alors les 2 touches « g » et « cl » s'éteignent, l'écran affiche un « gr », et ensuite la touche « cl » respire pour indiquer à l'utilisateur qu'il peut changer l'unité de pesage : il peut le faire ou bien poser un poids sur la balance qui aura pour conséquence d'éteindre la respiration de la touche « cl ».
Alternativement, si l'utilisateur choisit la touche « cl », alors les 2 touches « g » et « cl » s'éteignent, l'écran affiche un « cl », et ensuite la touche « g » respire pour indiquer à l'utilisateur qu'il peut changer l'unité de pesage : il peut le faire ou bien poser un poids sur la balance qui aura pour conséquence d'éteindre la respiration de la touche « cl ».
Enfin, si l'utilisateur ne souhaite appuyer ni sur « cl » ni sur « g », il pose un premier poids sur la balance, alors le poids une fois stable est mesuré et affiché en gramme par défaut.

Dans chacune des trois alternatives précitées, comme suite à la variation de poids détectée et stable, le cycle de pesée peut véritablement commencer. A ce moment, la touche de commande « tare » respire.

Si l'utilisateur choisit de suivre cette recommandation en appuyant sur la touche tare, alors la touche tare s'éteint et l'afficheur se remet à zéro.
Si l'utilisateur choisit de ne pas suivre cette recommandation, il peut choisir une autre fonction en appuyant sur « cl » ou bien sur « g ». Selon une première alternative non recommandée, l'utilisateur appuie sur « cl », alors la touche « tare » s'éteint, l'afficheur affiche le poids en centilitres. Selon une deuxième alternative non recommandée, l'utilisateur appuie sur « gr », alors la touche « tare » s'éteint, l'afficheur affiche le poids en grammes.

Si l'une ou l'autre des deux alternatives non recommandées est sélectionnée, l'étape la plus optimale est jugée être la tare et elle est recommandée à l'utilisateur par respiration de la touche « tare». Si l'utilisateur suit la recommandation et appuit sur « tare », alors le bouton tare s'éteint et l'afficheur affiche à nouveau un poids égal à 0gr ou Ocl, en fonction de la fonction « cl » ou « gr » précédemment choisie. Si en revanche l'utilisateur ne veut pas faire la tare, il peut sélectionner une autre fonction en appuyant sur « cl » ou bien sur « g » et revient à l'arborescence citée plus haut.

Dans cet algorithme, il a donc été proposé, en fonction de la phase de la pesée, et au cours de tout le cycle de pesée, au moins une fois la fonction tare, la fonction pesée de solide, et la fonction pesée de liquide.

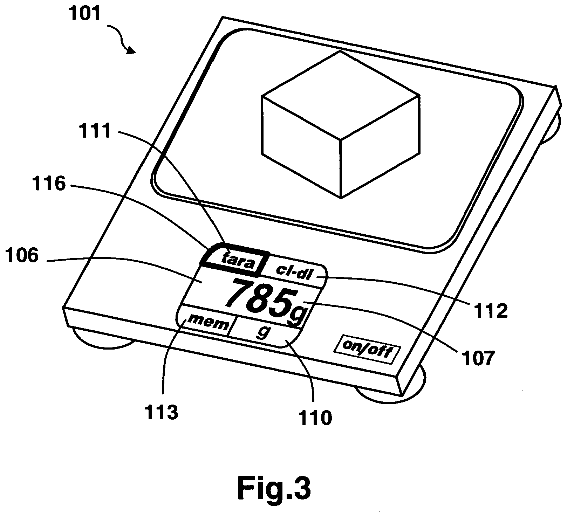

La figure 3 illustre un autre mode de réalisation de l'invention. La balance 101 comporte un afficheur à cristaux liquides 106 comprenant une zone centrale 107 pour afficher le résultat de la pesée et des zones périphériques 110, 111, 112, 113 matérialisées par un marquage du type sérigraphie. Sur le même principe que dans le mode de réalisation précédent, ces zones matérialisées forment des touches de commande 110, 111, 112, 113 virtuelles. Au centre de chaque touche 110, 111, 112, 113, un marquage indique la fonction réalisée par la balance lorsque l'utilisateur appuie sur cette touche.

L'afficheur 106 comporte pour chaque touche de commande 110, 111, 112, 113 un segment 116 en forme de cadre qui lorsque qu'il est activé tel que visible sur la fig.3 entoure le marquage et permet l'identification la touche 111. Cette construction permet de réaliser une identification de la touche de commande de manière très simple et très économique.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les touches disposées autour de l'afficheur peuvent comporter un micro interrupteur comprenant un contact mobile actionné par une pression de l'utilisateur.

Dans une autre variante de réalisation, la diode électroluminescente ou le segment peuvent clignoter pour renforcer l'identification de la touche par l'utilisateur.

Dans une autre variante de réalisation, l'afficheur à cristaux liquides intégrant les touches de commande de fonction peut être tactile suivant une technologie capacitive ou résistive. Pour la technologie capacitive, un film supplémentaire est rajouté au verre extérieur de l'afficheur dans lequel sont accumulées des charges électriques qui sont évacuées lors du contact du doigt de l'utilisateur. On mesure la quantité de charge pour déterminer si un appui a été effectué. Pour la technologie résistive, c'est un film double avec un faible espace entre les deux. Ces deux films sont alimentés et quand on appuie sur le verre de l'afficheur que l'on déforme très légèrement, on vient mettre en contact ces 2 films d'où la détection d'un appui.

## Revendications

1. Balance de cuisine (1, 101) comportant des touches de commande (10,11,12,13,110,111,112,113) permettant de sélectionner une fonction telle que la réalisation de la tare, une pesée d'un liquide, une pesée d'un solide ou la mise en mémoire d'une mesure, à une étape de réalisation d'un cycle de pesée, ladite balance comportant un dispositif d'identification d'au moins une touche de commande piloté par un circuit électronique (5), **caractérisée en ce qu'**une seule touche de commande (10,11,12,13,110,111,112,113) correspondant à sa fonction unique est identifiée comme la fonction suivante la plus probable à mettre en oeuvre par étape de fonctionnement d'un cycle de pesée.

2. Balance de cuisine selon une des revendications précédentes, où le circuit électronique (5) comporte un algorithme prédéfini d'identification de la fonction la plus probable à mettre en oeuvre en fonction de la nature de l'étape ou des étapes précédente(s).

3. Balance de cuisine selon une des revendications précédentes où la nature des étapes précédentes est comprise dans l'ensemble comprenant: la variation de poids, l'appui de la touche pesée d'un liquide, l'appui de la touche pesée d'un solide, l'appui de la touche Tare, l'appui d'une touche marche/arrêt.

4. Balance de cuisine selon une des revendications précédentes, **caractérisée en ce que** l'ensemble des touches de commande (10,11,12,13,110,111,112,113) comprend au moins une touche parmi les suivantes : touche de fonction réalisation de la tare, touche de fonction pesée d'un liquide, touche de fonction pesée d'un solide, touche de fonction mise en mémoire d'une mesure.

5. Balance de cuisine selon une des revendications précédentes, où le circuit électronique (5) garde les touches de commande non identifiées opérationnelles par l'utilisateur.

6. Balance de cuisine selon une des revendications précédentes, **caractérisée en ce que** le dispositif d'identification comporte au moins un moyen d'éclairage (15,16) de chaque touche de commande (10,11,12,13).

7. Balance de cuisine selon la revendication précédente, où au moins un moyen d'éclairage est capable, lorsqu'il est activé par le dispositif d'identification, de produire un ou plusieurs cycles d'éclairage comprenant une première phase de croissance lente de l'intensité lumineuse suivie d'une deuxième phase de décroissance lente de l'intensité lumineuse, et éventuellement suivie d'une troisième phase d'extinction.

8. Balance de cuisine selon la revendication précédente où la durée de phase de croissance de 0 à 100% d'intensité lumineuse et la durée de phase de décroissance de 100 à 0% sont égales et chacune comprises dans un intervalle temporel de 2 à 5 secondes.

9. Balance de cuisine selon une des revendications précédentes, **caractérisée en ce que** chaque moyen d'éclairage comporte au moins une diode électroluminescente (15,16).

10. Balance de cuisine selon une des revendications précédentes, **caractérisée en ce que** ladite balance comporte un afficheur (6,106) pour afficher un poids mesuré, et **en ce que** les touches de commande (10,11,12,13) des fonctions sont disposées autour de l'afficheur (6).

11. Balance de cuisine selon une des revendications précédentes, **caractérisée en ce que** chaque touche de commande (10,11,12,13) est une touche virtuelle.

12. Balance de cuisine selon une des revendications précédentes, **caractérisée en ce que** chaque touche de commande (10,11,12,13) comporte au moins un contact mobile.

13. Balance de cuisine (101) selon la revendication 1, **caractérisée en ce que** ladite balance comporte un afficheur (106) pour afficher un poids mesuré, et **en ce que** les touches de commande (110,111,112,113) des fonctions sont disposées à l'intérieur de l'afficheur (106).

14. Balance de cuisine selon la revendication 13, **caractérisée en ce que** chaque touche de commande (110,111,112,113) est une touche virtuelle intégrée à l'afficheur (106).

## Patentansprüche

1. Küchenwaage (1, 101), die Tasten zum Steuern (10, 11, 12, 13, 110, 111, 112, 113) umfasst, die es ermöglichen, eine Funktion, wie beispielsweise die Durchführung des Leergewichts, ein Wiegen einer Flüssigkeit, ein Wiegen eines Feststoffs oder das Speichern einer Messung in einem Schritt zur Durchführung eines Wägezyklus auszuwählen, wobei die Waage eine Identifikationsvorrichtung mit mindestens einer Taste zum Steuern umfasst, die von einer elektronischen Schaltung (5) geführt wird, **dadurch gekennzeichnet, dass** eine einzelne Taste zum Steuern (10, 11, 12, 13, 110, 111, 112, 113), die ihrer einzigartigen Funktion entspricht, als die folgende Funktion identifiziert wird, die am wahrscheinlichsten durch einen Funktionsschritt eines Wägezyklus umgesetzt wird.

2. Küchenwaage nach einem der vorhergehenden Ansprüche, wobei die elektronische Schaltung (5) einen vordefinierten Algorithmus zur Identifizierung der Funktion umfasst, die am wahrscheinlichsten als Funktion der Natur des vorhergehenden Schritts oder Schritte umgesetzt wird.

3. Küchenwaage nach einem der vorhergehenden Ansprüche, wobei die Natur der vorhergehenden Schritte innerhalb der Gesamtheit eingeschlossen ist, die umfasst: die Veränderung des Gewichts, das Drücken der Taste zum Wiegen einer Flüssigkeit, das Drücken der Taste zum Wiegen eines Feststoffs, das Drücken der Taste für das Leergewicht, das Drücken einer Start-/Stoptaste.

4. Küchenwaage nach einem der vorhergehenden Ansprüche, **dadurch gekennzeichnet, dass** die Gesamtheit der Tasten zum Steuern (10, 11, 12, 13, 110, 111, 112, 113) mindestens eine Taste aus den Folgenden umfasst: Funktionstaste zur Durchführung des Leergewichts, Funktionstaste zum Wiegen einer Flüssigkeit, Funktionstaste zum Wiegen eines Feststoffs, Funktionstaste zum Speichern einer Messung

5. Küchenwaage nach einem der vorhergehenden Ansprüche, wobei die elektronische Schaltung (5) die nicht identifizierten Tasten zum Steuern durch den Benutzer betriebsbereit hält.

6. Küchenwaage nach einem der vorhergehenden Ansprüche, **dadurch gekennzeichnet, dass** die Identifizierungsvorrichtung zumindest ein Beleuchtungsmittel (15, 16) für jede Taste zum Steuern (10, 11, 12, 13) umfasst.

7. Küchenwaage nach dem vorhergehenden Anspruch, wobei mindestens ein Beleuchtungsmittel, wenn es durch die Identifikationseinrichtung aktiviert ist, einen oder mehrere Beleuchtungszyklen erzeugen kann, die eine erste Phase des langsamen Anstiegs der Lichtintensität gefolgt von einer zweiten Phase des langsamen Abfallens der Lichtintensität und gegebenenfalls gefolgt von einer dritten Phase des Erlöschens umfasst.

8. Küchenwaage nach dem vorhergehenden Anspruch, wobei die Dauer der Phase des Anstiegs der Lichtintensität von 0 bis 100 % und die Dauer der Phase des Abfallens der Lichtintensität von 100 bis 0 % gleich sind und jeweils in einem Zeitbereich von 2 bis 5 Sekunden liegen.

9. Küchenwaage nach einem der vorhergehenden Ansprüche, **dadurch gekennzeichnet, dass** jedes Beleuchtungsmittel wenigstens eine Leuchtdiode (15, 16) umfasst.

10. Küchenwaage nach einem der vorhergehenden Ansprüche, **dadurch gekennzeichnet, dass** die Waage eine Anzeige (6, 106) zum Anzeigen eines gemessenen Gewichts umfasst, und dass die Tasten (10, 11, 12, 13) zum Steuern der Funktionen um die Anzeige (6) angeordnet sind.

11. Küchenwaage nach einem der vorhergehenden Ansprüche, **dadurch gekennzeichnet, dass** jede Taste zum Steuern (10, 11, 12, 13) eine virtuelle Taste ist.

12. Küchenwaage nach einem der vorhergehenden Ansprüche, **dadurch gekennzeichnet, dass** jede Taste zum Steuern (10, 11, 12, 13) zumindest einen beweglichen Kontakt umfasst.

13. Küchenwaage (101) nach Anspruch 1, **dadurch gekennzeichnet**, das die Waage eine Anzeige (106) umfasst, um ein gemessenes Gewicht anzuzeigen, und dass die Tasten zum Steuern (110, 111, 112, 113) innerhalb der Anzeige (106) angeordnet sind.

14. Küchenwaage nach Anspruch 13, **dadurch gekennzeichnet, dass** jede Taste zum Steuern (110, 111, 112, 113) eine virtuelle Taste ist, die in der Anzeige (106) integriert ist.

## Claims

1. Kitchen scale (1, 101) comprising control keys (10, 11, 12, 13, 110, 111, 112, 113) for selecting a function such as taring, liquid weighing, solid weighing or storing a measurement, during a step for carrying out a weighing cycle, wherein the said scale includes a device for identifying at least one control key, driven by an electronic circuit (5), **characterised in that** a single control key (10, 11, 12, 13, 110, 111, 112, 113) corresponding to a single function thereof is identified as the next function that is the most likely to be implemented by an operation step of a weighing cycle.

2. Kitchen scale according to one of the preceding claims, wherein the electronic circuit (5) comprises a predefined algorithm for identifying the most likely function to be implemented according to the nature of the preceding step or step(s).

3. Kitchen scale according to one of the preceding claims wherein the nature of the preceding steps is included in the set comprising: a weight variation, pushing of the liquid weighing button, pushing of the solid weighing button, pushing of the Tare button, pressing the on/off button.

4. Kitchen scale according to one of the preceding claims, **characterised in that** the set of control keys (10, 11, 12, 13, 110, 111, 112, 113) comprises at least one key among the following: a taring function key, a liquid weighing function key, a solid weighing function key, storing a measure function key.

5. Kitchen scale according to one of the preceding claims, where the electronic circuit (5) retains the unidentified operational control keys by the user.

6. Kitchen scale according to one of the preceding claims, **characterised in that** the identification device comprises at least one means for lighting (15, 16) each control key (10, 11, 12, 13).

7. Kitchen scale according to the preceding claim, wherein at least one means for lighting is able, when it is activated by the device for identification, to produce one or several lighting cycles comprising a first phase of slow growth of light intensity followed by a second phase of slow decline of light intensity, and possibly followed by a third phase of turning off the light.

8. Kitchen scale according to the preceding claim wherein the duration of the growth phase from 0 to 100% of light intensity and the duration of the decline phase from 100 to 0% are equal and each one is in a time interval of 2 to 5 seconds.

9. Kitchen scale according to one of the preceding claims, **characterised in that** each means of lighting comprises at least one light-emitting diode (15, 16).

10. Kitchen scale according to one of the preceding claims, **characterised in that** the said scale comprises a display (6, 106) in order to display a measured weight, and **in that** the control keys (10, 11, 12, 13) of the functions are arranged around the display (6).

11. Kitchen scale according to one of the preceding claims, **characterised in that** each control key (10, 11, 12, 13) is a virtual key.

12. Kitchen scale according to one of the preceding claims, **characterised in that** each control key (10, 11, 12, 13) comprises at least one mobile contact.

13. Kitchen scale (101) according to claim 1, **characterised in that** the said scale comprises a display (106) to display a measured weight, and **in that** the control keys (110, 111, 112, 113) of the functions are arranged inside the display (106).

14. Kitchen scale according to claim 13, **characterised in that** each control key (110, 111, 112, 113) is a virtual key integrated into the display (106).
